# EUROPEAN PATENT APPLICATION

(11) **EP 1 971 056 A2**
(43) Date of publication of application: **17.09.2008**
(21) Application number: 08002066.2
(22) Date of filing: 04.02.2008
(51) Int. Cl.: H04J 3/16, H04L 12/40

(54) **Multiplexed optical signal transmission apparatus**

(30) Priority: 14.03.2007 JP 2007064339
(71) Applicant: Hitachi Communication Technologies, Ltd., Tokyo (JP)
(72) Inventor: Atsumi, Toshiyuki, c/o Hitachi, Ltd., Chiyoda-ku Tokyo 100-8220 (JP); Shibasaki, Masatoshi, c/o Hitachi, Ltd., Chiyoda-ku Tokyo 100-8220 (JP); Tamura, Yukihisa, c/o Hitachi, Ltd., Chiyoda-ku Tokyo 100-8220 (JP); Takatori, Koji, c/o Hitachi, Ltd., Chiyoda-ku Tokyo 100-8220 (JP)
(74) Representative: Strehl Schübel-Hopf & Partner

(57) **Abstract**

A transmission apparatus (40) for multiplexing optical signals has a multi-rate signal processing unit (32) that has a plurality of signal processing circuits (41-44) in advance according to various signal speeds and frame formats and selects a necessary signal processing circuit as necessary. In addition, the transmission apparatus (40) acquires a type code, used to identify the type of the signal of a removable optical module, from the optical module and, from the acquired information, automatically determines the operation mode of the multi-rate signal processing unit (32), bandwidth allocations according to the signal speeds, and monitoring item contents for different frame formats to eliminate the need for maintenance engineer's work that is otherwise required when a low-speed signal is added.

## Description

### BACKGROUND OF THE INVENTION

The present invention relates to a transmission apparatus and a transmission method that multiplex multiple signals, which have different signal speeds or frame formats, into one multiplexed signal which has a predetermined signal speed and, conversely, de-multiplex one multiplexed signal, which has a predetermined signal speed, into multiple signals which have different signal speeds or frame formats.

Recently, broadband lines for connection to the Internet and other networks are widely used in a home, and the line demand oriented toward the IP traffic is increasing. In response to this demand, the services based on high-speed, low-cost Gigabit Ethernet (registered trademark) or 10 Gigabit Ethernet (registered trademark) are rapidly dominating the market where SONET/SDH or ATM that has been a mainstream of the WAN lines. An increase in demand for those lines requires more and more optical fibers with the result that those optical fibers must be utilized more and more efficiently. One of the important objects of a transmission apparatus on a branch line or a main line is to accommodate, in one optical fiber, as many various types of WAN lines as possible from not only a new network but also an existing network. To achieve this object, a transmission apparatus uses various multiplexing methods to increase line accommodation efficiency.

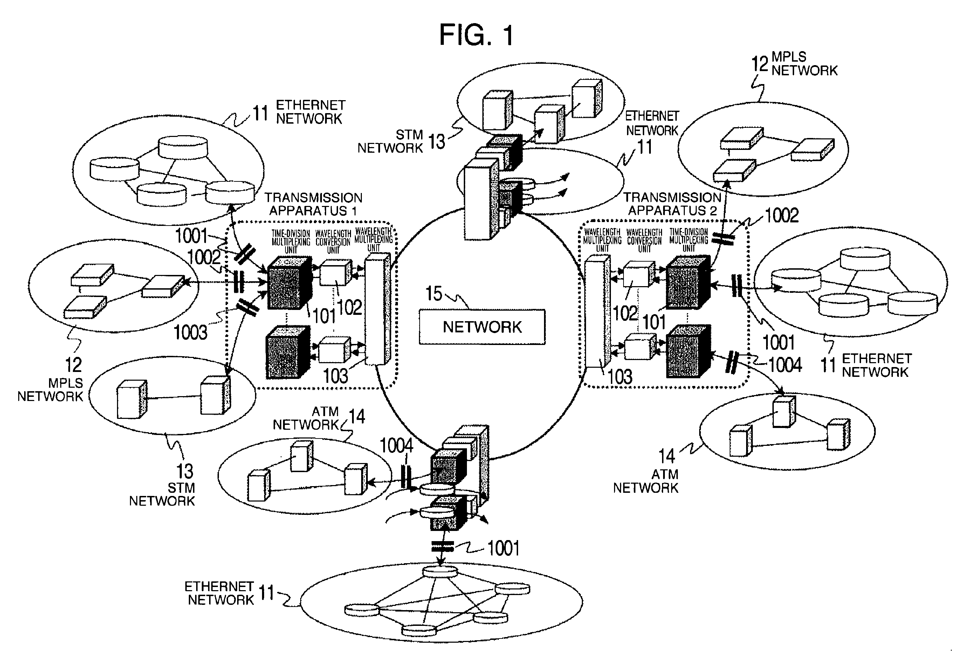

FIG. 1 shows an example of a transmission apparatus used in a network. The transmission apparatus, though arranged in a ring topology in this example, may be connected in any connection type such as a point to point connection, a mesh connection, and a star connection. A time-division multiplexing unit 101 of each transmission apparatus accommodates many WAN lines that are service lines from many networks such as an Ethernet network 11, an MPLS network 12, an STM network 13, and an ATM network 14, and data is transmitted among the locations via a ring-topology network 15 using multiplexed optical signals. Because those various service lines have different signal speeds and different frame formats, the transmission apparatus must have interfaces 1001-1004, connectable to those service lines, in order to accommodate the service lines. Usually, different hardware devices are used for the interfaces 1001-1004 according to the type of service lines that are connected.

In general, a transmission apparatus basically comprises a time-division multiplexing unit 101, a wavelength conversion unit 102, and a wavelength multiplexing unit 103. The time-division multiplexing unit 101 is a functional block that uses the Time Division Multiplex (TDM) technology to multiplex N signals into one multiplexed signal. The time-division multiplexing unit 101 changes N signals physically into one signal in this way to increase the transmission line accommodation efficiency by N times. The wavelength conversion unit 102, which has the function to convert the wavelengths of time-division multiplexed signals to other wavelengths, acts as an interface between the time-division multiplexing unit 101 and the wavelength multiplexing unit 103. The wavelength multiplexing unit 103, which uses the Wavelength Division Multiplex (WDM) technology, allocates M signals to M different wavelengths for multiplexing/de-multiplexing. This processing increases the accommodation efficiency of the transmission lines by M times, that is, increases the accommodation efficiency by the number of multiplexed/de-multiplexed wavelengths.

In this way, the transmission apparatus combines the time-division multiplexing unit 101 that accommodates N signals, the wavelength multiplexing unit 103 that accommodates M signals, and the wavelength conversion unit 102 that acts as the interface between the time-division multiplexing unit 101 and the wavelength multiplexing unit 103 to maximize the efficiency of accommodation of service lines in the transmission line. When the time-division multiplexing technology is combined with the wavelength multiplexing technology, the accommodation efficiency of the transmission lines can be increased by N × M times as compared with that in a case in which the individual WAN lines 11-14 are accommodated directly.

The signals flowing through the WAN lines accommodated by a transmission apparatus are classified roughly into the following two types: one is the signals such as those used in Ethernet (registered trademark) in which a bandwidth is not permanently allocated but the user signals are divided into packets for transmission and reception, one packet at a time, and the other is the signals such as those used in SONET/SDH in which a bandwidth is permanently allocated to each user so that the signals are sent and received as continuous signals by occupying the allocated bandwidth. The technology for accommodating the WAN lines in one optical fiber is divided roughly into the following two types: one is the technology in which packets that are variable-length frames such as those used in Ethernet are accommodated in a SONET/SDH network and, conversely, the other is the technology in which fixed-length frames signals such as those used for SONET/SDH signals are accommodated in a packet network. As the typical technology for the former, the method that uses the HDLC-Like Framing technology stipulated primarily by IETF RFC1662, the method that uses the LAPS (Link Access Procedure SDH) technology similar to the HDLC-Like Framing technology and stipulated by ITU-T X.86, and the method that uses the GFP (Generic Framing Procedure) technology stipulated by ITU-T.G7041, known as the general capsulation technology, are standardized. As the typical technology for the latter, the line emulation technology is standardized, for example, by ITU-T Y.1413.

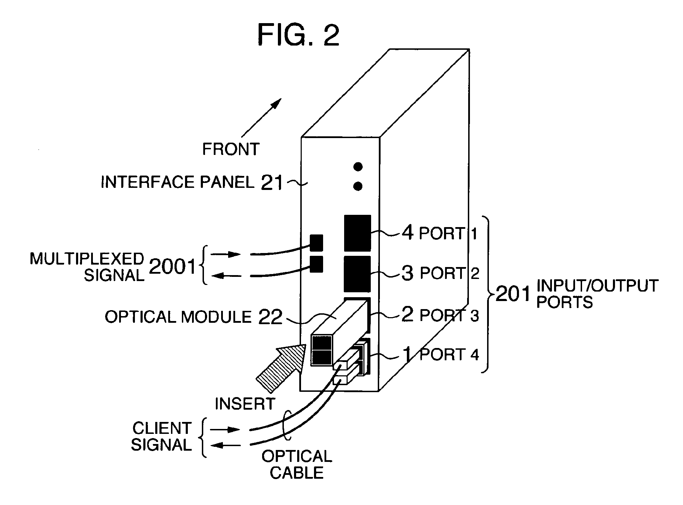

To send and receive optical signals of various signal types and various transmission speeds, a transmission apparatus uses a technology that is flexibly adaptable to various optical types. More specifically, the transmission apparatus uses an optical module called an SFP (Small Form-factor Pluggable) type optical module or an XFP (10 Gigabit small Form-factor Pluggable) type optical module that can be freely removed from the interface card. The physical shape, the optical interface specifications, and electrical interface specifications of this optical module are defined by the MSA (Multi Source Agreement). FIG. 2 shows how an SFP type optical module or an XFP type removable optical module is installed in the interface card.

In an example of an interface card shown in FIG. 2, an interface card 21 has four input/output ports 201. Up to four optical modules can be installed in, that is, up to four WAN lines can be connected to, port 1 - port 4 on the interface card 21. The interface card 21 multiplexes the signals received by a maximum of four ports and outputs a multiplexed signal 2001. Even if an optical module is already installed in port 1 in FIG. 2 for providing services to the WAN line connected to that port, this SFP-type or XFP-type optical module 22 can be inserted into, or removed from, port 2, or can be exchanged or added, from the direction of the front of the interface card 21 as necessary.

The optical type is usually determined by the optical type of the signal of a client device connected to a WAN line or by the transmission distance from the client device and, therefore, all ports on the interface card 21 do not always send and receive signals of the same optical type. Even in this case, the SFP type or XFP type optical module can be added or exchanged independently as necessary without affecting other ports as described above. So, this technology is useful for flexibly adapting to various optical types of light transmitted via WAN lines.

### SUMMARY OF THE INVENTION

In general, the optical module 22 shown in FIG. 2 converts a received optical signal of some optical type to an electrical signal or, conversely, converts an electrical signal to an optical signal of some optical type. On the other hand, the error monitoring function or the transmission line quality monitoring function, which are based on the time-division multiplexing technology or designed according to the requirements proposed by the standardization organizations such as ITU-T and IEEE, are implemented by the processing for an electrical signal. Therefore, the function for executing the processing described above is provided, not in the optical module 22, but on the interface card 21.

Because the same signal processing circuit is used on the interface card 21 even if the optical module 22 is exchanged, an accommodated signal having a different signal speed or a different frame format cannot be processed properly on the same interface card 21. To properly process this signal, the interface card must be replaced by an interface card having a circuit capable of processing the signal. For example, when there is a need to add a new WAN line having a frame format different from that of the signal already accommodated by port 1 on the interface card in FIG. 2, ports 2-4 which are free cannot be used for accommodating the new WAN line because those ports are designed for processing a format different from that of the new WAN line. So, even if there are free ports, another interface card capable of processing the signal having the frame format of the WAN line to be added must be installed.

Because the same interface card cannot accommodate an optical signal as described above if there is a difference for example, in the frame format of a WAN line to be accommodated, the accommodation efficiency of transmission lines in the time-division multiplexing mode may be decreased. A decrease in efficiency is most remarkable when many types of WAN lines must be accommodated. As there is more and more service demand or a user's need becomes more and more diversified, various types of optical signals, which have various optical types, signal speeds, and frame formats, are transmitted via the WAN lines 11-14. However, preparing the interface cards, one for each signal type, may cause a problem that prevents the network 15 from accommodating WAN lines efficiently. This problem, in turn, generates a need for a transmission apparatus capable of flexibly adapting to a difference in the optical type, signal speed, or frame format of various WAN line types.

Another problem is that, when a WAN line is added or removed or when the line configuration is changed, the conventional transmission apparatus requires a maintenance engineer to manually perform setting work such as the registration of a device, an interface card, or an optical module. This work not only increases the work amount of the maintenance engineer but also generates a maintenance engineer's error in the operation, setting, and recognition, and this human error sometimes leads to a serious effect on the service. Because of this, there is a strong demand today for a transmission apparatus that has the function for flexibly adapting to various types of WAN lines as well as the function for avoiding operation errors in the maintenance work and for reducing the work amount.

The present invention provides a method for accommodating multiple signals, which have different signal speeds or frame formats, on one interface card for multiplexing and/or de-multiplexing and a method for implementing the function for automatically registering the settings necessary for the operation simply by installing an XFP type optical module or an SFP type optical module into an input/output port on the interface card.

To solve the problems described above, the present invention provides a multi-rate signal processing unit for each input/output port. This multi-rate signal processing unit has circuits, each of which can process one of signals having different signal speeds and frame formats, and selects an appropriate signal processing unit corresponding to the type of a signal so that one multi-rate signal processing unit can process multiple types of signal. Once an optical module is installed, the multi-rate signal processing unit performs the following sequence of operations automatically. The multi-rate signal processing unit acquires the type code, which is stored in the optical module in advance for identifying the type of the optical module, checks the acquired type code to determine the signal type that can be accommodated by the optical module and, based on the determination result, selects a suitable signal processing circuit so that the multi-rate signal processing unit can process the accommodated signal, determines the error monitoring items and transmission line quality monitoring items corresponding to the signal, and starts monitoring the determined items.

The present invention allows multiple signals, which have different signal speeds or frame formats, to be accommodated on one interface card, thus accommodating lines more flexibly and efficiently in a transmission line.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram showing an example of the configuration of a network to which the present invention is applied.
FIG. 2 is a diagram showing how a removable optical module is installed on an interface card.
FIG. 3 is a diagram showing an example of the configuration of a transmission apparatus in a first embodiment of the present invention.
FIG. 4 is a diagram showing a detailed example of a first configuration of a multi-rate signal processing unit.
FIG. 5 is a diagram showing an example of the setting of signal processing unit selection instructions in the first configuration example of the multi-rate signal processing unit.
FIG. 6 is a diagram showing a detailed example of a second configuration of the multi-rate signal processing unit.
FIG. 7 is a diagram showing a detailed example of a third configuration of the multi-rate signal processing unit.
FIG. 8 is a diagram showing the processing sequence of an operation mode selection unit in the detailed example of the third configuration of the multi-rate signal processing unit.
FIG. 9 is a diagram showing the processing sequence of the parts when an optical module is installed in the first embodiment.
FIG. 10 is a diagram showing an example of an operation mode determination table in the first embodiment.
FIG. 11 is a diagram showing the frame format of the STM-64 signal.
FIG. 12 is a diagram showing the warning monitoring items and transmission quality monitoring items for each signal type.
FIG. 13 is a diagram showing an example of a display on a maintenance terminal.
FIG. 14 is a diagram showing the processing sequence of the parts when an optical module is removed in the first embodiment.
FIG. 15 is a diagram showing an example of the configuration of a transmission apparatus in a second embodiment of the present invention.
FIG. 16 is a diagram showing an example of an operation mode determination table in the second embodiment.

### DETAILED DESCRIPTION OF THE INVENTION

In the description of embodiments below, a transmission apparatus will be described that has the function for changing the signal processing method according to the optical type, signal speed, and frame format of a signal to be accommodated. In addition, a transmission apparatus will be described that has the function for automatically performing the setting and the registration necessary for starting the service without maintenance engineer's intervention immediately after an optical module is installed in an input/output port. The following describes two typical embodiments of the present invention in detail with reference to the drawings.

### [First embodiment]

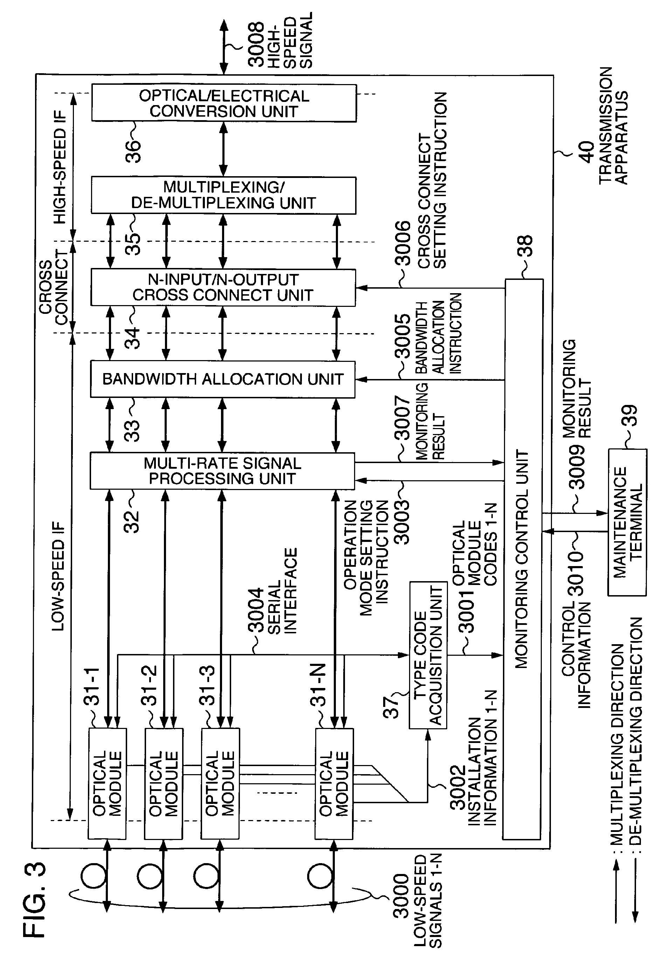

FIG. 3 shows the configuration of a transmission apparatus 40 in a first embodiment of the present invention. The transmission apparatus in the first embodiment comprises N optical modules 31-1 to 31-N that receive N low-speed signals 1-N 3000, which have different optical types, signal speeds, or frame formats, from WAN lines as optical signals, convert those optical signals to N electrical signals and send the converted signals to a multi-rate signal processing unit 32 or, conversely, receive N electrical signals from the multi-rate signal processing unit 32, convert the electrical signals to N optical signals, and send the low-speed signals 1-N 3000 to the WAN lines; the multi-rate signal processing unit 32 that can properly process N signals, which have different signal speeds and frame formats, in the multiplexing mode and the de-multiplexing mode independently according to the signal speeds or the frame formats in response to an operation mode setting instruction 3003 from a monitoring control unit 38; a bandwidth allocation unit 33 that can map N signals to the bandwidths used by the signals or, conversely, de-map the bandwidths of the signals to N signals, according to a bandwidth allocation instruction 3005 received from the monitoring control unit 38; an N-input/N-output cross connect unit 34 that can output N signals, received by N input ports, to any of N output ports according to a cross connect setting instruction 3006 received from the monitoring control unit 38; a multiplexing/de-multiplexing unit 35 that multiplexes N signals into one signal or de-multiplexes one signal into N signals; an optical/electrical conversion unit 36 that converts an electrical signal from the multiplexing/de-multiplexing unit 35 to an optical signal and generates and sends a high-speed signal 3008 and, at the same time, receives the high-speed signal 3008, which is an optical signal, converts the received optical signal to an electrical signal, and sends the converted electrical signal to the multiplexing/de-multiplexing unit 35; a type code acquisition unit 37 that reads a type code, which represents the type of an optical module, from each of the N optical modules 31-1 to 31-N; the monitoring control unit 38 that, among the functional blocks described above, exchanges control information such as the operation mode setting instruction 3003, bandwidth allocation instruction 3005, and cross connect setting instruction 3006, as well as monitoring results such as a monitoring result 3007 and optical module codes 1-N 3001, for monitoring and controlling purposes; and a maintenance terminal 39, connected to this monitoring control unit 38, that allows a maintenance engineer to set up the transmission apparatus 40 and that displays the monitoring result of the transmission apparatus 40, the types the optical modules 31, and the types of accommodated signals.

The type code acquisition unit 37 is connected to the N optical modules 31 via a standard serial interface 3004 defined by the MSA, acquires the type code of each optical module 31 via this standard serial interface 3004, and notifies the acquired type code to the monitoring control unit 38. The type code acquisition unit 37 is also connected, one to one, to each of the optical modules 31 via a signal line different from the standard serial interface 3004 described above so that the type code acquisition unit 37 can individually monitor installation information 3002, that is, information on whether or not an optical module 31 is inserted in each port.

The meaning of the type codes of the optical modules 31, the requirements for storing the type code in advance in an SFP type or XFP type optical module, and the method for acquiring the type code via the standard serial interface 3004 are defined by the MSA. It is assumed that this embodiment uses an optical module conforming to the MSA specifications and that the acquisition method also conforms to the specifications. However, it should be noted that the embodiment does not always confirm to the MSA. For example, identification information other than MSA type codes, if defined in advance for indicating what type of optical signal each optical module can process, may also be used in the same manner as the type codes of this embodiment.

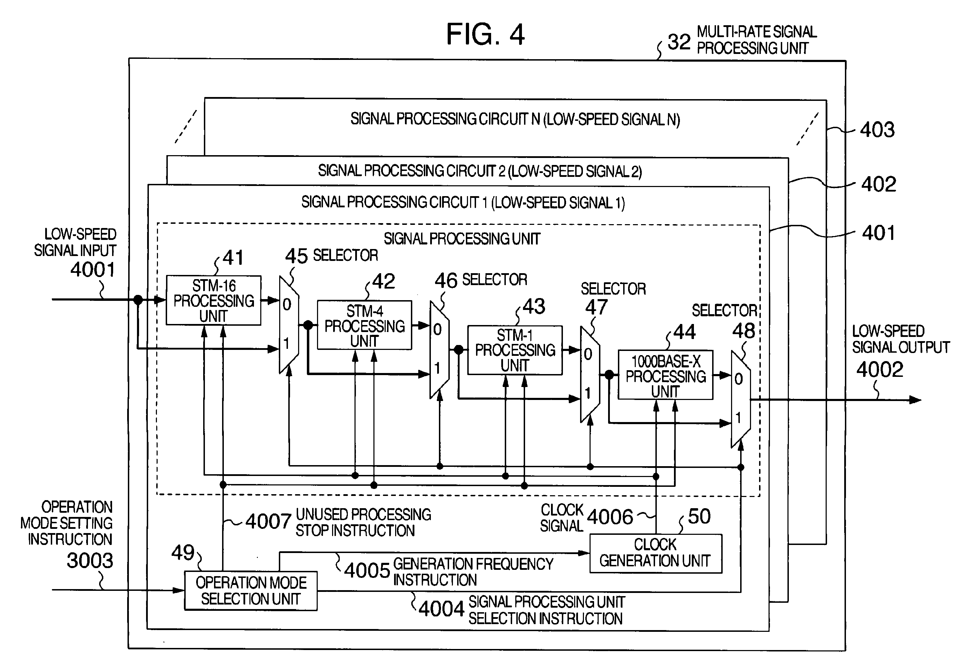

FIG. 4 is a diagram showing an example of a first configuration of the multi-rate signal processing unit 32. The multi-rate signal processing unit 32 comprises N signal processing circuits 401-403. The signal processing circuits 1-N (401-403) are provided, one for each of N low-speed signal inputs 4001, and an operation mode selection instruction 4003 can be changed independently among N signal processing circuits.

The following describes the configuration of the signal processing circuit 401. The other signal processing circuits 402 and 403 have the same configuration. The signal processing circuit 401 in this embodiment comprises four signal processing units, that is, an STM-16 processing unit 41, an STM-4 processing unit 42, an STM-1 processing unit 43, and a 1000BASE-X processing unit 44, for processing four types of signals having different signal speeds and frame formats; an operation mode selection unit 49 that can select one of the four signal processing units based on the operation mode selection instruction 4003 received from an external source; and a clock generation unit 50 that generates a clock signal having a frequency for operating the selected signal processing unit. More specifically, the STM-16 processing unit 41, STM-4 processing unit 42, and STM-1 processing unit 43 perform not only signal processing conforming to ITU-T G.707 or G.783 but also warning monitoring and transmission line quality monitoring processing for the STM-16 signal, STM-4 signal, and STM-1 signal. The 1000BASE-X processing unit 44 performs the signal processing conforming to IEEE802.3 as well as error monitoring and transmission line quality monitoring processing for the 1000BASE-X signal. The signal processing units 41-44 are connected in series with a low-speed signal input 4001, and each of those signal processing units is followed immediately by a selector, 45-48, that individually selects whether or not the signal passes through the signal processing unit.

The operation mode selection unit 49 generates a signal processing unit selection instruction 4004 that instructs the selectors 45-48 to select one of the four signal processing units based on the operation mode setting instruction 3003 received from the monitoring control unit 38, a generation frequency instruction 4005 that instructs the clock generation unit 50 to generate a clock signal for properly performing the selected signal processing, and an unused processing stop instruction 4007 that stops the circuits of the signal processing units, 41-44, that are not selected. The clock generation unit 50 generates a clock signal 4006, which has a frequency suitable for the signal speed of the received low-speed signal input 4001, based on the generation frequency instruction 4005 received from the operation mode selection unit 49, and outputs the generated clock signal to the STM-16 processing unit 41, STM-4 processing unit 42, STM-1 processing unit 43, and 1000BASE-X processing unit 44, respectively. In response to this clock signal 4006, each of the processing units 41-44 performs appropriate signal processing in synchronization with the received clock signal 4006, and processed signal is selected by the selectors 45-48 and is sent to the bandwidth allocation unit 33.

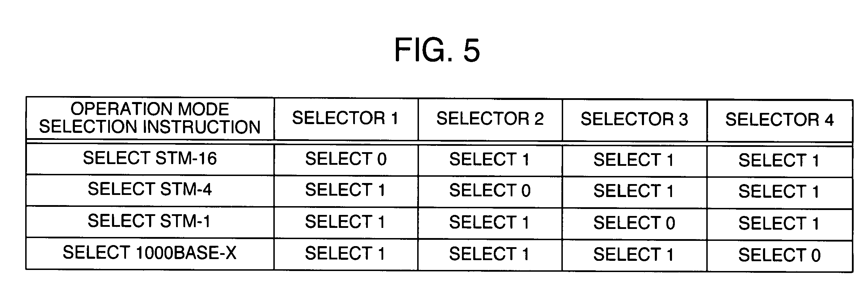

FIG. 5 shows what values are set in the selectors 45-48 depending upon which one of "select STM-16", "select STM-4" "select STM-1", and "select 1000BASE-X" is specified by the operation mode setting instruction 3003. For example, when there is a need for operating the STM-4 processing unit 42, the selector 46, which selects the STM-4 processing unit 42, selects 0 and the selector 46 selects and outputs the signal processed and output by the STM-4 processing unit 42. The other selectors 45, 47, and 48 are set to 1 because they must select, not the output of the immediately preceding processing unit, but the signal pass-through. In addition, the signal processing units 41-44 stop the signal processing not selected by the selectors according to the unused processing stop instruction 4007 specified by the operation mode selection unit 49. It should be noted that this processing is performed to reduce the power consumption and, so, this processing should be performed only when required.

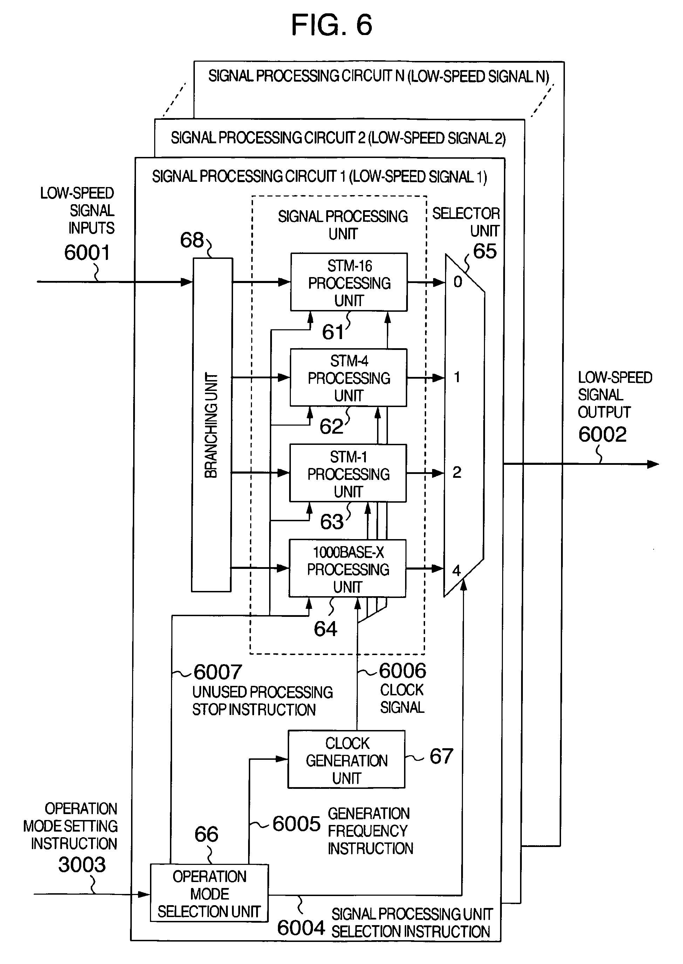

Next, FIG. 6 shows an example of a second configuration of the multi-rate signal processing unit 32 shown in FIG. 3. The example of the configuration shown in FIG. 6 differs from the configuration shown in FIG. 4, in which the signal processing units are connected in series, in that an STM-16 processing unit 61, an STM-4 processing unit 62, an STM-1 processing unit 63, and a 1000BASE-X processing unit 64 are connected in parallel. In the example of the configuration shown in FIG. 6, a low-speed signal input 1-N 6001 is branched into four by a branching unit 68, the branched inputs are input to the signal processing units 61-64 respectively and, based on a signal processing unit selection instruction 6004 sent from an operation mode selection unit 66, the output from one of the four signal processing units 61-64 is selected by a selector unit 65.

The operation mode selection unit 66 generates the signal processing unit selection instruction 6004 that instructs the selector unit 65 to select one of the four signal processing units 61-64 based on the operation mode setting instruction 3003 received from the monitoring control unit 38, a generation frequency instruction 6005 that instructs a clock generation unit 67 to generate a clock signal which has a frequency for properly performing selected signal processing, and an unused processing stop instruction 6007 that stops the circuits of the signal processing units that are not selected. The signal processing unit selection instruction 6004 is sent to the selector unit 65, the generation frequency instruction 6005 is sent to the clock generation unit 67, and the unused processing stop instruction 6007 is sent to the STM-16 processing unit 61, STM-4 processing unit 62, STM-1 processing unit 63, and 1000BASE-X processing unit 64.

The clock generation unit 67 generates a clock signal 6006, which has a frequency suitable for the signal speed of the received low-speed signal input 6001, based on the generation frequency instruction 6005 received from the operation mode selection unit 66, and outputs the generated clock signal to the STM-16 processing unit 61, STM-4 processing unit 62, STM-1 processing unit 63, and 1000BASE-X processing unit 64, respectively. In response to this clock signal 6006, each of the signal processing units 61-64 performs appropriate signal processing in synchronization with the received clock signal 6006, and the signal selected by the selector unit 65 is sent to the bandwidth allocation unit 33. The signal processing unit selection instruction 6004 is represented by one of the values 0-3. The value of 0 is sent to select the STM-16 processing unit 61, the value of 1 is sent to select the STM-4 processing unit 62, the value of 2 is sent to select the STM-1 processing unit 63, and the value of 3 is sent to select the 1000BASE-X processing unit 64. Based on the value, the selector unit 65 selects an appropriate signal processing unit.

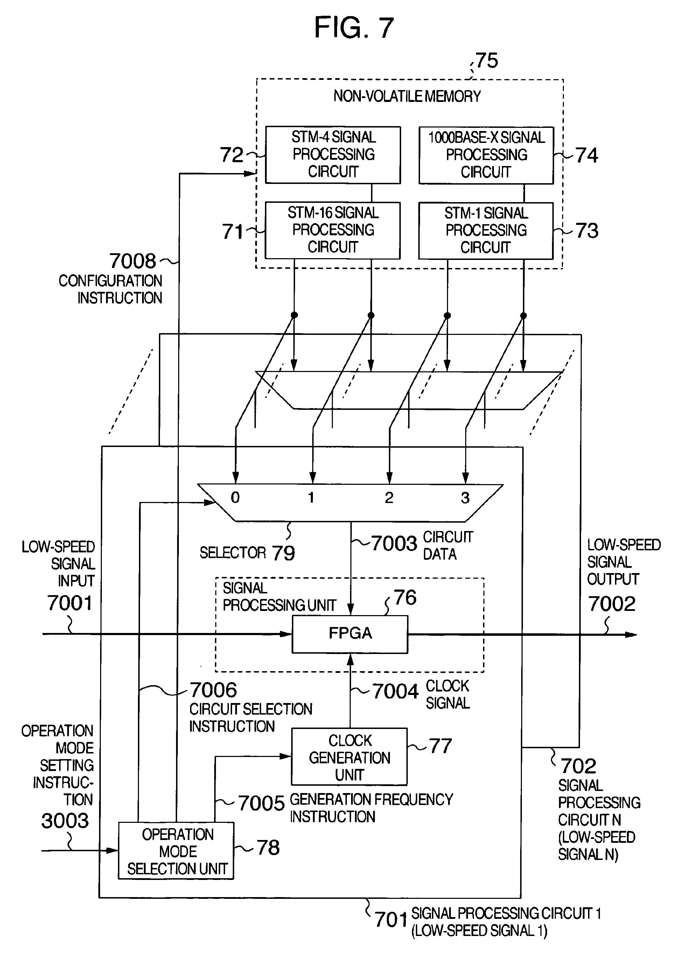

Next, FIG. 7 shows an example of a third configuration of the multi-rate signal processing unit 32 shown in FIG. 3. In this configuration example, the multi-rate signal processing unit 32 comprises N signal processing circuits, that is, signal processing circuit 1 to signal processing circuit N (701-702), as well as one non-volatile memory 75. This non-volatile memory 75 stores in advance the circuit data of four signal processing circuits: an STM-16 signal processing circuit 71, an STM-4 signal processing circuit 72, an STM-1 signal processing circuit 73, and a 1000BASE-X signal processing circuit 74. Each of signal processing circuit 1 to signal processing circuit N has a Field Programmable Gate Array (FPGA) 76 whose circuit data can be re-written externally. A circuit selection instruction 7006 is sent from an operation mode selection unit 78 to select necessary circuit data from the circuit data stored in the non-volatile memory 75, and the selected circuit data is written in the FPGA 76 in the signal processing circuits 1-N (701-702) to rewrite the circuit inside the FPGA 76. This configuration allows the N signal processing circuits 1-N (701-702) to operate independently in an appropriate operation mode. Independently using the FPGA 76, whose circuit data can be re-written, in each of the N signal processing circuits 1-N (701-702) eliminates the need for individually providing a circuit required for each of the signal processing units 1-N as shown in FIG. 4 and FIG. 6. Instead, this configuration allows N signal processing circuits 1-N (701-702) to share circuit data in one non-volatile memory 75 regardless of the number of signal processing circuits and allows the FPGA to be configured (to be written in the FPGA) as necessary.

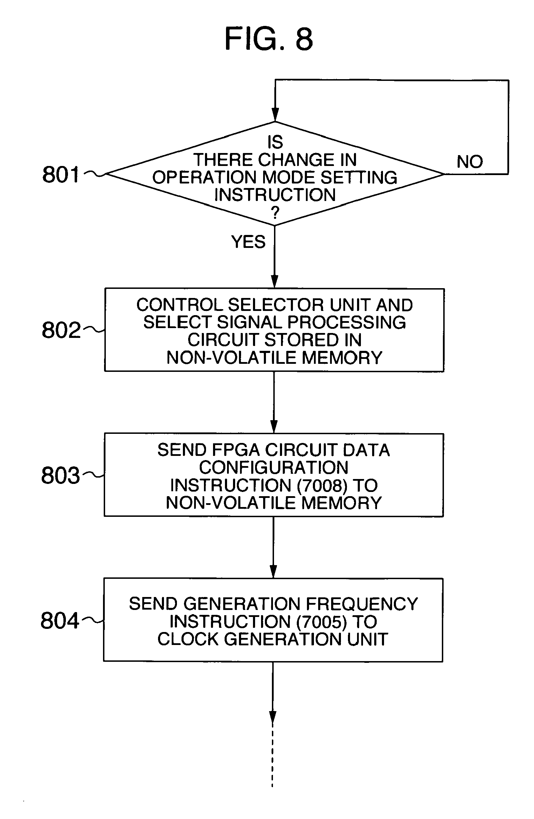

FIG. 8 shows the processing flow of the operation mode selection unit 78. The operation mode selection unit 78 monitors if there is a change in the state of the operation mode setting instruction 3003 (801). If there is no change in the operation mode setting instruction 3003, the FPGA 76 is not configured but the state is kept unchanged; only if there is a change in the operation mode setting instruction 3003, the configuration of the FPGA 76 is started. If there is a change in the operation mode setting instruction 3003, a selector 79 first selects an appropriate circuit from circuit data 71-74 stored in the non-volatile memory 75 (802). After that, the operation mode selection unit 78 sends a configuration instruction 7008 to the non-volatile memory 75 (803), the non-volatile memory 75 that receives the instruction sends the selected circuit data to the FPGA 76 to re-write the circuit data stored in the FPGA 76. It is assumed that the configuration sequence between the non-volatile memory 75 and the FPGA 76 is based on the specifications defined by the parts manufacturer. The operation mode selection unit 78 determines a frequency appropriate for operating the circuit selected in step 802 in the processing flow and sends a generation frequency instruction 7005 to a clock generation unit 77 (804).

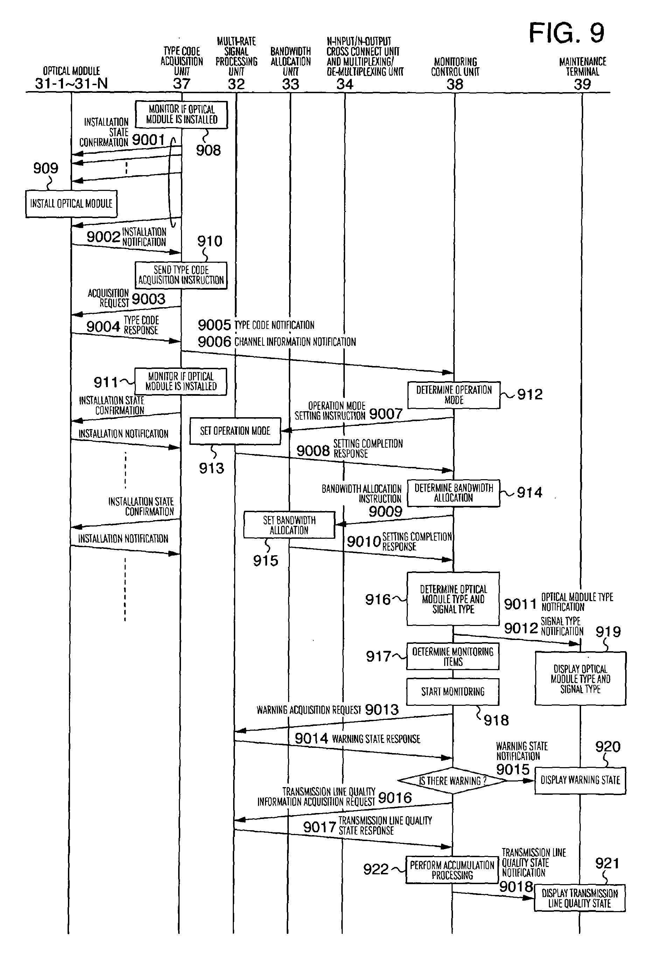

FIG. 9 is a sequence diagram showing the processing that is started when the optical module 31 is installed in the transmission apparatus of the present invention having the multi-rate signal processing unit 32 described above. First, the type code acquisition unit 37 monitors the optical modules 31-1 to 31-N whether or not the optical modules 31-1 to 31-N are installed. The sequence of processing is started when the installation state of an optical module is changed "from installed to uninstalled" or "from uninstalled to installed". The term "installed" here refers, for example, to the state in which the optical module 31 is installed in one of the input/output ports 201 on the interface card 21 to which this embodiment is applied. When one of the optical modules 31-1 to 31-N that has been uninstalled becomes installed (Install optical module 909), the type code acquisition unit 37 receives an installation notification 9002 from the optical module 31 indicating that the optical module has been installed. In response to this installation notification 9002, the type code acquisition unit 37 sends a type code acquisition request 9003 to the optical module, which is one of the optical modules 31-1 to 31-N and which has been installed, to request it to send the type code. At this time, the type code acquisition unit 37 stores information on the port, which is one of N input/output ports and to which the acquisition request 9003 is sent, as the channel information. It should be noted that any other information, which identifies each of multiple input/output ports, may also be used instead of the channel information.

In response to this acquisition request 9003, the optical module, one of the optical modules 31-1 to 31-N, sends a type code, which indicates the type of the installed optical module, as the response (type code response 9004). In response to this type code, the type code acquisition unit 37 notifies channel information, stored when the acquisition request 9003 was sent, and the acquired type code to the monitoring control unit 38 (type code notification 9005 and channel information notification 9006).

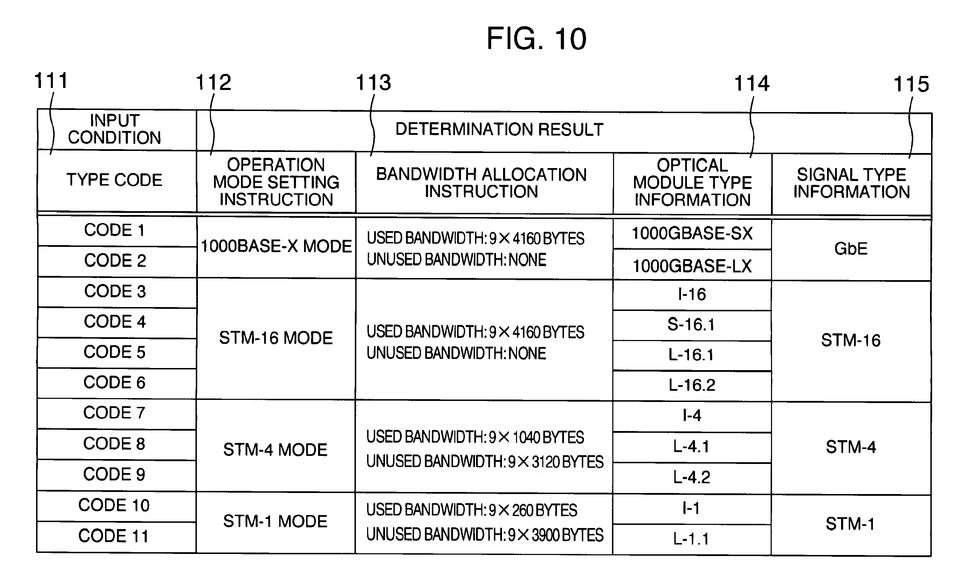

When this type code notification 9005 and the channel information notification 9006 are received, the monitoring control unit 38 determines the operation mode 912 according to the operation mode determination table shown in FIG. 10. The determination table, shown in FIG. 10, is a table used to output an operation mode setting instruction 112, a bandwidth allocation instruction 113, an optical module type information 114, and a signal type information 115, as the determination result based on a type code 111 that is used as the determination condition.

For example, when the type code 111 is "code 7", the monitoring control unit 38 determines that the operation mode setting instruction 112 is "STM-4 mode", the bandwidth allocation instruction 113 is "bandwidth used: 9 × 1040 bytes, free bandwidth: 9 × 3120 bytes", the optical module type information 114 is "I-4", and the signal type information 115 is "STM-4". It is also possible for the monitoring control unit 38 to prepare the tables, one for each multi-rate signal processing unit 32, in internal or external storage means of the monitoring control unit 38 to store information on the operation modes of the signal processing circuits included in the multi-rate signal processing unit 32. This table should store the information shown in FIG. 10 as necessary, for example, the correspondence between information identifying each signal processing circuit and the operation mode, bandwidth allocation information, etc. of the signal processing circuit.

Based on the determination result described above, the monitoring control unit 38 notifies an operation mode setting instruction 9007, "STM-4 mode", to the multi-rate signal processing unit 32 that processes the signal of the channel notified by the channel information notification 9006. The multi-rate signal processing unit 32, which receives this operation mode setting instruction 9007, has the configuration shown in FIG. 4, FIG. 6, or FIG. 7. An appropriate signal processing circuit is selected from the multi-rate signal processing unit 32 based on the operation mode setting instruction 9007 and, when the setting is completed, a setting completion response 9008 is notified to the monitoring control unit 38.

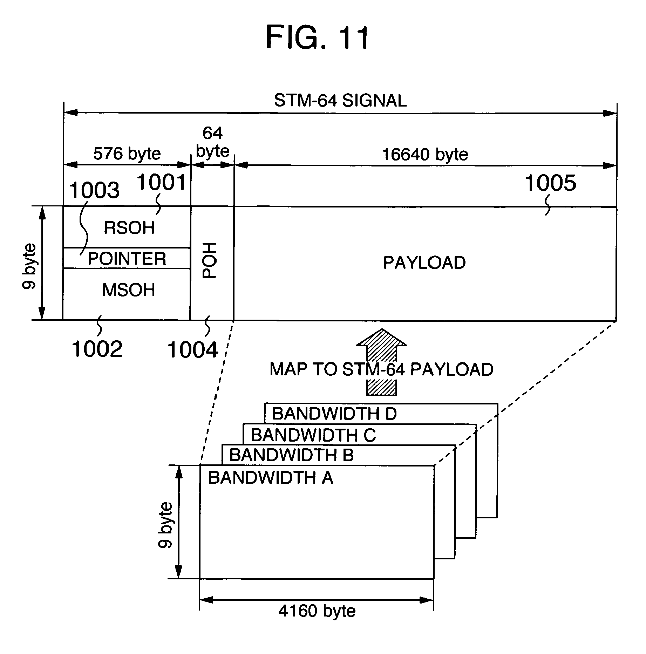

Next, the monitoring control unit 38 determines the bandwidth allocation 914 according to the determination table shown in FIG. 10. In the description below, consider an actual example in which the high-speed signal 3008 shown in FIG. 3 is STM-64 and that there are four low-speed signals. FIG. 11 shows the frame format of STM-64. The STM-64 signal, which has the SDH signal frame format defined by ITU-T G.707, comprises various overheads such as a Regeneration Section Overhead (RSOH 1001), a Multiplex Section Overhead (MSOH 1002), and a Path Overhead (POH 1004), a pointer 1003, and a payload 1005 in which user data is stored. For the STM-64 signal, the payload 1005 has a data area composed of 9 rows × 16640 columns where low-speed signal user data is stored. When there are four low-speed signals, the payload 1005 is divided first equally into four areas (areas A-D) with low-speed signal 1 mapped to area A, low-speed signal 2 mapped to area B, low-speed signal 3 mapped to area C, and low-speed signal 4 mapped to area D.

In this example, the data area of 9 rows × 4160 columns is permanently allocated to one low-speed signal. Because the signal speed of the low-speed signal varies from signal to signal, the whole data area of the allocated 9 rows × 4160 columns is not always used and, so, the used bandwidth and the unused (free) bandwidth must be adjusted according to the signal speed of the low-speed signal. This is the purpose of bandwidth allocation determination 914. In the sequence diagram shown in FIG. 9, the monitoring control unit 38 determines the bandwidth allocation 914 according to the determination table shown in FIG. 10. For example, if the operation mode setting instruction 9007 specifies the STM-4 mode as in the example given above, the monitoring control unit 38 determines that the used bandwidth is 9 × 1040 bytes and the unused bandwidth is 9 × 3120 bytes and sends a bandwidth allocation instruction 9009 that specifies this bandwidth information to the bandwidth allocation unit 33. The bandwidth allocation unit 33 sets the bandwidth allocation of the used bandwidth and the unused bandwidth 915 according to this instruction and, after completing the bandwidth allocation setting, notifies a setting completion response 9010 to the monitoring control unit 38.

When the setting completion response 9010 is received from the bandwidth allocation unit 33, the monitoring control unit 38 determines the optical module type and the signal type 916 based on the determination table shown in FIG. 10. For example, when the type code 111 shown in FIG. 10 is "code 7", the monitoring control unit 38 determines that the optical module type information 114 is "I-4" and the signal type information 115 is "STM-4" and sends an optical module type notification 9011 and a signal type notification 9012 to the maintenance terminal 39. The maintenance terminal 39 displays the screen so that the maintenance engineer can understand that the installed optical module type is I-4 and the signal type is STM-4.

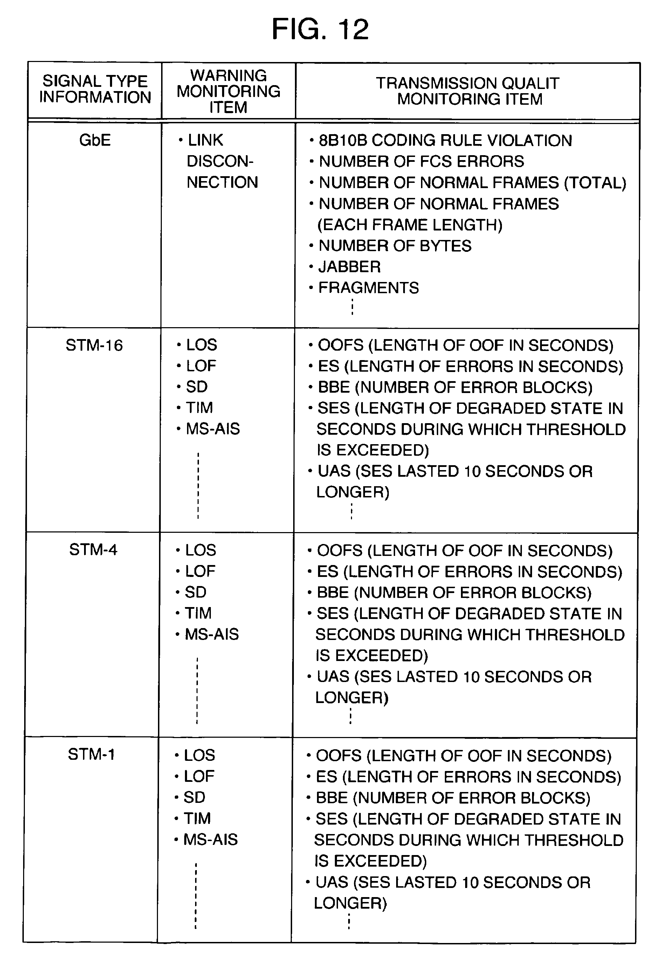

The monitoring control unit 38 may also determine the monitoring items at the same time corresponding to the signal type information described above. For example, the monitoring items are those shown in FIG. 12. Those monitoring items are defined by the standardization organizations, such as ITU-T and IEEE, according to the signal type, and the monitoring item types, the number of monitoring items, and the error determination condition for the monitoring items vary according to the signal type. At the monitoring items determination 917 in the sequence shown in FIG. 9, the monitoring item types and the error determination condition are determined from the signal type information and, based on the determined result, the monitoring is started (monitoring start 918).

After starting the monitoring, the monitoring control unit 38 sends a warning acquisition request 9013 to the multi-rate signal processing unit 32 and receives a warning state response 9014 to acquire the warning state and, in addition, sends a transmission line quality information acquisition request 9016 and receives a transmission line quality state response 9017 to acquire the information on the error state and quality of the transmission line. To generate the warning state response 9014 described above, the multi-rate signal processing unit 32 checks the signal pattern, defined according to the frame format, if the pattern is abnormal and checks the particular pattern insertion position and the data compatibility to monitor if they are correct. In addition, to generate the transmission line quality state response 9017 described above, the multi-rate signal processing unit 32 checks the parity, CRC(Cyclic Redundancy Check), and coding rule defined for each frame format. In addition, the monitoring control unit 38 sends a warning state notification 9015, which indicates whether or not there is a warning, to the maintenance terminal 39, performs the standard-defined accumulation processing for the transmission line quality state, and sends the result to the maintenance terminal 39 as a transmission line quality state notification 9018.

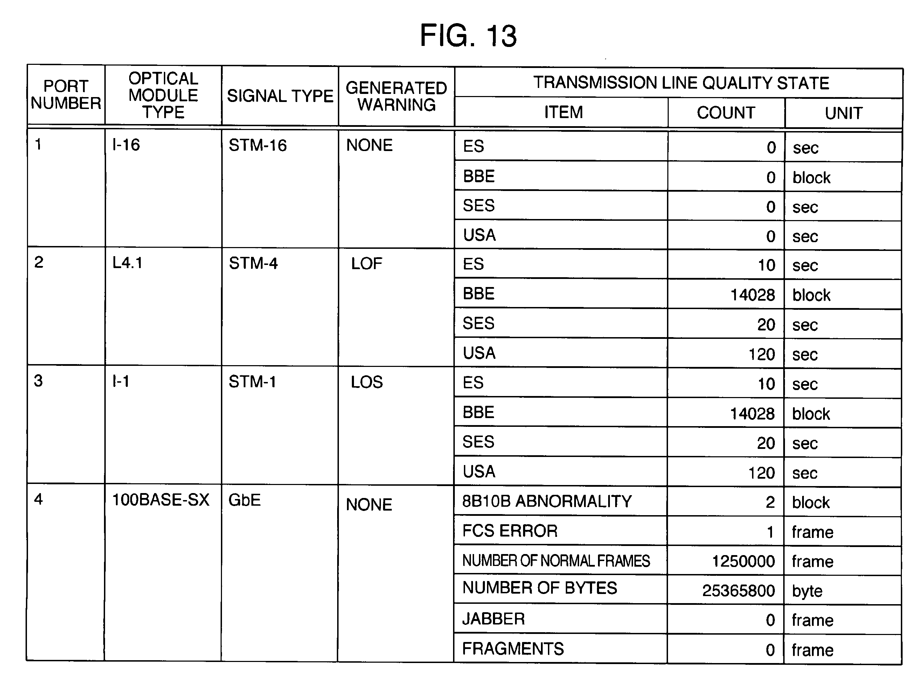

The maintenance terminal 39 receives the warning state notification 9015 and the transmission line quality state notification 9018 from the monitoring control unit 38 and displays the result on the screen so that the maintenance engineer can understand it easily. FIG. 13 shows an example of the display on the maintenance terminal 39. This example shows the optical module type, signal type, warning state, and the transmission line quality state, notified from the monitoring control unit 38, in the list format for each port number of low-speed signals. The maintenance terminal 39 may be connected to the monitoring control unit 38 directly or may be connected to the monitoring control unit 38 indirectly via a DCN (Data Communication Network) line provided by a general public communication network to allow the maintenance terminal 39 to monitor a transmission apparatus which is remote from the transmission apparatus.

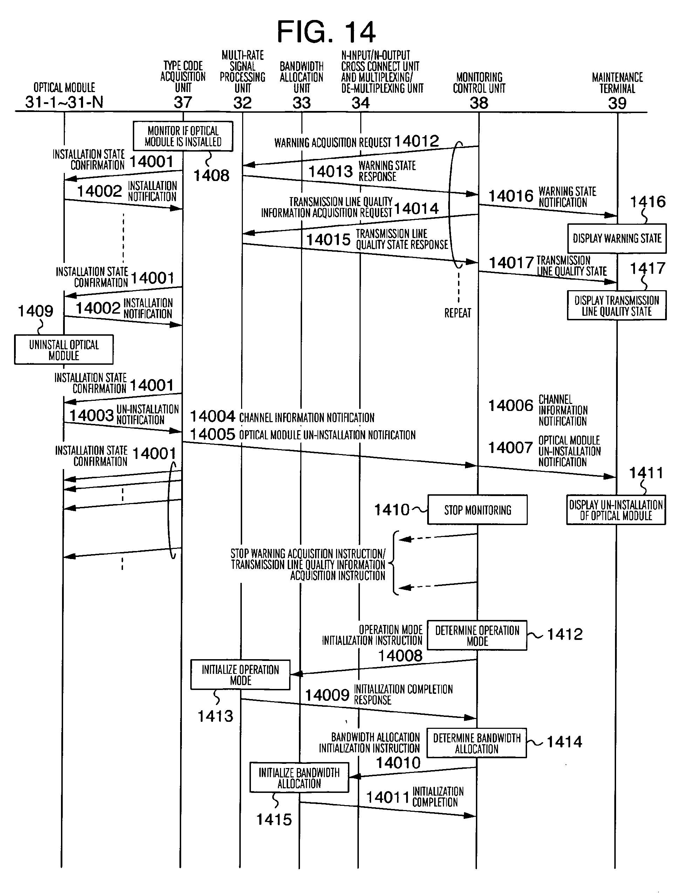

Next, FIG. 14 is a sequence diagram showing the sequence of operations performed when an installed optical module 31 is removed. In the state in which the optical modules 31 are installed, the type code acquisition unit 37 monitors the installation state of the optical modules 31-1 to 31-N by sending an installation state confirmation 14001 to the optical modules 31-1 to 31-N and receiving an installation notification 14002 from the optical modules 31-1 to 31-N. When one of the optical modules 31-1 to 31-N is removed and uninstalled 1409, the type code acquisition unit 37 receives an un-installation notification 14003, which indicates that the optical module has been removed, from the optical modules 31-1 to 31-N and, upon receiving this notification, sends a channel information notification 14004, which indicates from which port of the N ports the optical module was removed, and an optical module un-installation notification 14005, which indicates that the optical module becomes uninstalled, to the monitoring control unit 38.

Based on the information received from the type code acquisition unit 37, the monitoring control unit 38 sends a channel information notification 14006 and an optical module un-installation notification 14007 of the optical module to the maintenance terminal 39. In response to those notifications, the maintenance terminal 39 displays information indicating that the optical module has been removed as well as its port number. This display means may be any form that can be identified by the maintenance engineer.

On the other hand, the monitoring control unit 38, which received the channel information notification 14004 and the optical module un-installation notification 14005 from the type code acquisition unit 37, stops the transmission of a warning acquisition request 14012 and a transmission line quality information acquisition request 14014 to the multi-rate signal processing unit 32 that were performed while the optical module was installed. The monitoring control unit 38 sends an operation mode initialization instruction 14008 to the multi-rate signal processing unit 32 and, after receiving an initialization completion response 14009 from the multi-rate signal processing unit 32, sends a bandwidth allocation initialization instruction 14010 to the bandwidth allocation unit 33 and receives an initialization completion response 14011 from the bandwidth allocation unit 33. When the reception of this response is completed, all the processing for the port from which the optical module was removed is stopped and the setting initialization is completed.
As a result, the sequence of operations returns to the initial state shown in FIG. 9, and the type code acquisition unit 37 continues monitoring the installation state of the optical modules 31-1 to 31-N.

The functions described above can implement a transmission apparatus that can flexibly accommodate the signals having different signal speeds and frame formats and that, by simply installing the optical modules 31 appropriate for a port that accommodates WAN lines, automatically selects the multi-rate signal processing unit 32 and necessary monitoring items according to the type of the installed optical module without intervention of a maintenance engineer(for example, in the registration processing). The functions may be implemented by hardware or software or by a combination of hardware and software.

### [Second embodiment]

Although the operation mode selection instruction, optical module type information, signal type information, and bandwidth allocation setting instruction are uniquely determined for one type code in the first embodiment, they cannot be uniquely determined when the type code of an optical module corresponds to two or more signal types. A second embodiment of the present invention is applicable to such a case.

This embodiment will be described using a transmission apparatus for which an XFP type optical module is used and which has a multi-rate signal processing unit that can accommodate the following three types of signals that have completely different frame formats and signals speeds: STM-64 (signal speed: 9953.28 Mbits/s) defined by ITU-T G.707 and 10GBASE-R (signal speed: 10312.5 Mbits/s) and 10GBASE-W (signal speed: 9953.28 Mbits/s) defined by IEEE802.3.

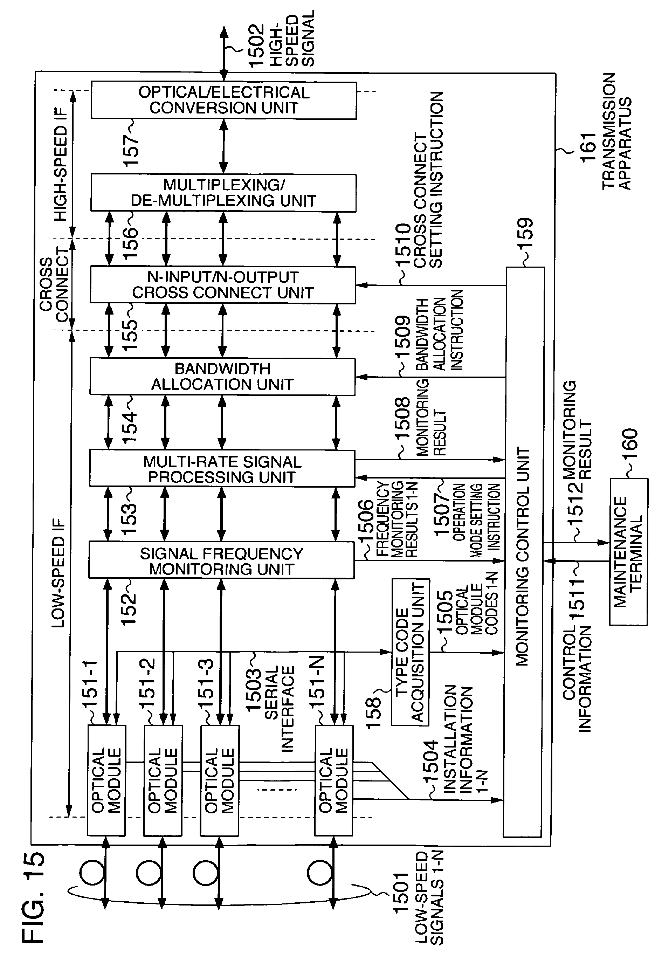

FIG. 15 shows the configuration of the transmission apparatus in the second embodiment. For an optical module 151 such as an XFP type optical module for which two or more signal types correspond to one optical module, the operation mode setting instruction, signal type information, etc., cannot be uniquely determined only by the type code acquired from the optical module. Because of this, a signal frequency monitoring unit 152 that monitors the frequency component of a signal received by the optical module 151 is added to the configuration of the first embodiment shown in FIG. 3, and this signal frequency monitoring unit 152 sends frequency monitoring results 1-N 1506 to a monitoring control unit 159. The other part of the configuration is exactly the same as that of the first embodiment. Although three types of signals are used in this embodiment as described above, a multi-rate signal processing unit 153 has two types of the signal processing circuits corresponding to 10GBASE-R and 10GBASE-W because the same frame format is used for 10GBASE-W and STM-64.

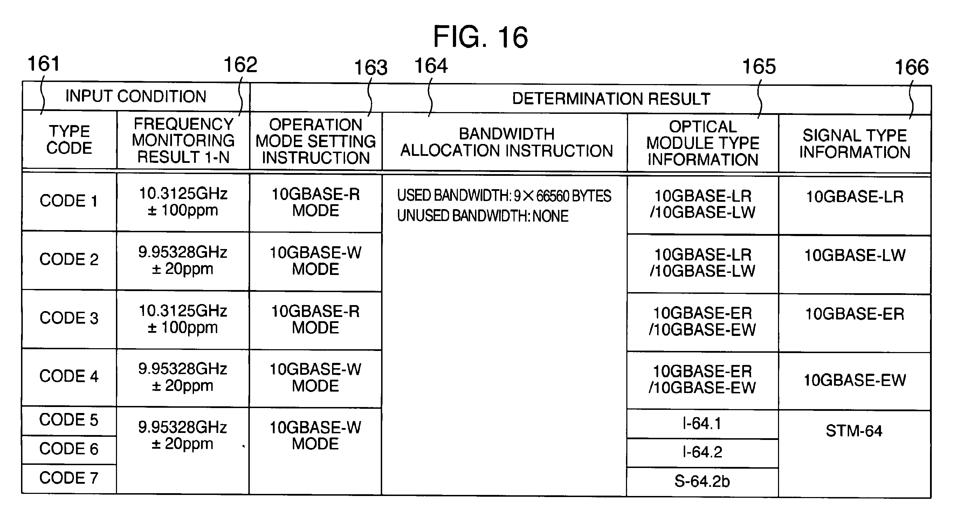

The monitoring control unit 159 receives a type code 161 and a frequency monitoring result 1-N 162 as the input condition and determines an operation mode setting instruction 163, a bandwidth allocation instruction 164, optical module type information 165, and signal type information 166 based on the determination table shown in FIG. 16. Only the type code is used as the input condition of this determination table in the first embodiment, while the type code and the frequency monitoring result 1-N 162 are used as the input condition in this embodiment.

For example, when the type code 161 acquired from the installed optical module 151 is "code 3" and the frequency monitoring result 1-N 162 is "10.3125 GHz±100ppm" in FIG. 16, the monitoring control unit 159 references the table in this figure and outputs a determination result that the operation mode setting instruction 163 is "10GBASE-R mode", the bandwidth allocation instruction 164 is "Used bandwidth: 9 × 66560 bytes, Unused bandwidth: None", the optical module type information 165 is "10GBASE-ER/10GBASE-EW", and the signal type information 166 is "10GBASE-ER". Based on this determination result, the subsequent operation is performed in exactly the same way as in the sequence diagrams shown in FIG. 9 and FIG. 14 in the first embodiment.

In the case of 10GBASE-LR and 10GBASE-ER, direct mapping sometimes results in an insufficient data amount in the bandwidth given by the bandwidth allocation instruction 164. In this case, the speed can be adjusted according to the signal processing specifications of the WIS(WAN Interface Sublayer), defined by IEEE802.3, to map the signals to the given bandwidth. Therefore, a bandwidth allocation unit 154 may include the WIS function defined by IEEE802.3 as necessary.

As described above, even if two or more signal types are allocated to one optical module 151, this embodiment achieves the same effect as that of the first embodiment by adding the signal frequency monitoring unit 152 and adding the frequency monitoring result to the determination table in FIG. 16 as an input condition. By doing so, the transmission apparatus can automatically select the multi-rate signal processing unit 153 and necessary monitoring items according to the type of the installed optical module 151 without intervention of a maintenance engineer(for example, in the registration processing) by simply installing the optical modules 151 in a port that accommodates WAN lines.

In the first embodiment and the second embodiment, a transmission apparatus and a transmission method can be implemented that automatically recognize the type of a signal transmitted via a user network and that automatically performs signal processing for each signal, error monitoring, and registration of the setting and management information necessary for transmission line quality monitoring without intervention of a maintenance engineer.

That is, one interface card can accommodate signals having different signal speeds and frame formats to allow a transmission line to accommodate lines more flexibly and efficiently. Because the transmission apparatus recognizes the frame format of an accommodated signal and switches the error monitoring items and transmission line quality monitoring items corresponding to the signal, the error monitoring function and the transmission line quality management function equivalent to those of the conventional transmission apparatus can be implemented. In addition, by simply installing an optical module corresponding to the optical type of a WAN line, the transmission apparatus performs the apparatus configuration registration, the registration that must be set, and the setting automatically and reliably, thus preventing a registration error or a setting error from affecting the service.

As the WAN line services become more and more diversified, there is a worry that incorrect maintenance work and its complicated procedure affect the service and, today, a transmission apparatus is required to have means for avoiding such a situation and the function for simplifying the work. In view of this situation, the present invention is extremely valuable because, by simply installing an optical module, the setting and the management information required for the operation are automatically registered on a multi-rate-compatible interface card by means provided by the present invention.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An interface card (21) having the multi-rate signal processing function comprising;
an input/output port that can accommodate a first signal and that can also accommodate a second signal that has a signal speed and a frame format different from a signal speed and a frame format of the first signal;
a signal processing unit (32), in which a signal processing circuit (401) capable of processing a signal having the frame format of the first signal and a signal processing circuit (402) capable of processing a signal having the frame format of the second signal are installed in advance;
a clock generation unit (50) that can generate clock signals having a plurality of frequencies suitable for processing the signal speeds of the first signal and the second signal so that both the signal speed of the first signal and the signal speed of the second signal, which are different to each other, can be processed;
means (49) that selects one signal processing circuit from a plurality of signal processing circuits in said signal processing unit in response to an instruction (3003) provided from a source external to the signal processing unit; and
means that selects a frequency of the clock signal generated by said clock generation unit (50).

2. An interface card (21) having the multi-rate signal processing function comprising;
an input/output port that can accommodate a first signal and that can also accommodate a second signal that has a signal speed and a frame format different from a signal speed and a frame format of the first signal;
a non-volatile memory (75) storing in advance circuit data of a signal processing circuit (701) capable of processing a signal having the frame format of the first signal and circuit data of a signal processing circuit (702) capable of processing a signal having the frame format of the second signal;
a configurable device (76) in which circuit data is written or whose circuit data is rewritable by an external instruction;
a clock generation unit (77) that can generate clock signals having a plurality of frequencies suitable for the signal speed of the first signal and the signal speed of the second signal, which are different to each other, so that both signal speeds can be processed;
means (78) that selects one piece of appropriate circuit data from a plurality of pieces of circuit data stored in said non-volatile memory (75) in response to an instruction (3003) from a source external to the signal processing unit;
means that downloads the selected circuit data to the configurable device (76) after the selection;
means that starts the downloaded circuit data in the configurable device (76); and
means that selects a frequency of clock signals generated by said clock generation unit (77), which can generate a plurality of frequencies, in response to an instruction from the external source.

3. An interface card (21) having the multi-rate signal processing function according to claim 2 wherein an FPGA (Field Programmable Gate Array) is used for said configurable device (76).

4. A transmission apparatus (40) that multiplexes a plurality of user signals into one multiplexed signal, comprising;
an interface card (21) having the multi-rate signal processing function according to claim 1, claim 2, or claim 3 wherein said input/output port is configured in such a way that an optical module, which can be freely installed and removed from outside said transmission apparatus, while said interface card is being installed on a unit of said transmission apparatus (40);
means that recognizes that the removable optical module is installed in an input/output port on said interface card;
means (37) that acquires a type code from the optical module, said type code being stored in advance in the installed optical module to identify a type of the optical module; and
means (49) that selects a signal processing circuit, which is appropriate for processing a received signal correctly based on the type code acquired from the optical module, from the multi-rate signal processing function.

5. A transmission apparatus (40) that multiplexes a plurality of user signals into one multiplexed signal according to claim 4, further comprising means that monitors frequency components of a signal received by the installed optical module,
wherein said means (49) uses the type code acquired from the optical module and the monitoring result of the frequency components for correctly processing the received signal.

6. A transmission apparatus (40) that multiplexes a plurality of user signals into one multiplexed signal according to claim 4 and claim 5, further comprising;
means (38) that determines appropriate monitoring items and an appropriate processing method, corresponding to a frame format of a signal received by the optical module, from the type code acquired from the optical module;
means (32) that performs error monitoring and transmission line quality monitoring based on the determined monitoring items and processing method; and
means that displays the monitoring result on a maintenance terminal (39).

7. A transmission apparatus (40) that multiplexes a plurality of user signals into one multiplexed signal according to claim 4 and claim 5, further comprising;
means that determines the type of the installed optical module from the acquired type code;
means that converts the type code to an optical module name identifiable by a maintenance engineer; and
means that displays the converted result on a screen on a maintenance terminal (39).

8. An interface card (21) having the multi-rate signal processing function according to claim 1, claim 2, or claim 3 wherein signals having two or more different frame formats can be processed by the same card.

9. A transmission apparatus (40) that multiplexes a plurality of user signals into one multiplexed signal comprising an interface card (21) of claim 8.

10. A transmission apparatus (40) that multiplexes a plurality of user signals into one multiplexed signal according to claim 4 or claim 5 wherein one input/output port that accommodates user signals is provided and there is no need for multiplexing.

11. A transmission apparatus (40) that multiplexes a plurality of user signals into one multiplexed signal according to claim 4 or claim 5 wherein an SFP or XFP type optical module, defined by the MSA (Multi Source Agreement), is used for the removable optical module.

12. A transmission apparatus (40) that multiplexes a plurality of user signals into one multiplexed signal according to claim 4 and claim 5 that can accommodate an SDH signal defined by ITU-T G.707.

13. A transmission apparatus (40) that multiplexes a plurality of user signals into one multiplexed signal according to claim 4 and claim 5 that can accommodate an Ethernet signal defined by IEEE 802.3.
